Europäisches Patentamt

European Patent Office

Office européen des brevets

(11) Veröffentlichungsnummer: **0 270 861**
**A1**

(12) **EUROPÄISCHE PATENTANMELDUNG**

(21) Anmeldenummer: 87116604.7

(22) Anmeldetag: 10.11.87

(51) Int. Cl.⁴: **B60P 3/22**

(30) Priorität: 04.12.86 DE 8632525 U

(43) Veröffentlichungstag der Anmeldung:
15.06.88 Patentblatt 88/24

(84) Benannte Vertragsstaaten:
**AT BE DE IT**

(71) Anmelder: **Karl Kässbohrer Fahrzeugwerke GmbH**
**Kässbohrerstrasse**
**D-7900 Ulm (Donau)(DE)**

(72) Erfinder: **Schmiedel,Ruedinger**
**Rosenweg 16**
**D-7910 Neu Ulm/Pfuhl(DE)**
Erfinder: **Kuebler, Dieter**
**Maienweg 84**
**D-7900 Ulm/Soeflingen(DE)**

(74) Vertreter: **Patentanwälte Grünecker,**
**Kinkeldey, Stockmair & Partner**
**Maximilianstrasse 58**
**D-8000 München 22(DE)**

(54) **Silofahrzeug für den Transport von Flüssigkeiten.**

(57) Die Erfindung betrifft ein Silofahrzeug (1) für den Transport von Flüssigkeiten und Schuttgütern. Es weist einen sich in Fahrtrichtung (F) ferstreckenden, um eine etwa horizontale Querachse (3) in eine Entnahmestellung (B) kippbaren Transportbehälter (2) auf, bei dem in Entnahmestellung (B) die Entnahmeöffnung (4) untenliegt. Im Inneren des Transportbehälters ist mindestens eine sich mit ihrer Hauptebene quer zur Fahrtrichtung erstreckende Schwallwand (5) angebracht.

Um ein Fahrzeug der eingangs genannten Art derart zu verbessern, daß es in gleicher Weise für den Transport von Flüssigkeiten wie auch für Schüttgüter eingesetzt werden kann, ist die Schwallwand in Transportstellung (A) des Transportbehälters (1) in einem Winkel zur Vertikalen geneigt. Sie weist mit ihrer Unterkante etwa zur Entnahmeöffnung (4).

FIG.1

0 270 861

# Silofahrzeug für den Transport von Flüssigkeiten

## Beschreibung

Die vorliegende Erfindung betrifft ein Silofahrzeug für den Transport von Flüssigkeiten und Schüttgütern mit einem sich in Fahrtrichtung erstreckenden, um eine etwa horizontale Querachse in eine Entnahmestellung kippbaren Transportbehälter mit in Entnahmestellung untenliegender Entnahmeöffnung, wobei im Inneren des Transportbehälters mindestens eine sich mit ihrer Hauptebene quer zur Fahrtrichtung erstreckende Schwallwand angebracht ist.

Tankfahrzeuge sind für den Transport von Flüssigkeiten aus der Praxis bekannt. In den Transportbehältern sind mehrere in Fahrtrichtung hintereinanderliegende, senkrechte Schwallwände angeordnet. Diese Schwallwände sind im allgemeinen als in den Behälter eingesetzte Böden ausgebildet, die Öffnungen aufweisen, welche ein langsames Durchströmen der Flüssigkeit in dem Behälter gestatten.

Solche Fahrzeuge eignen sich zwar recht gut für den Transport von Flüssigkeiten, jedoch sind sie für den Transport von Schüttgütern ungeeignet. Ist der Transportbehälter nämlich in Entnahmestellung gekippt, so liegen die Schwallwände etwa quer zur Ausströmrichtung des Schüttgutes. Das Schüttgut kann somit nur durch die kleinen Öffnungen in den in den Behälter eingesetzten

0 270 861

Schwallwänden hindurchtreten. Die Entnahmegeschwindigkeit
wird hierdurch stark beeinträchtigt. Ein restloses
Entleeren des Transportbehälters ist praktisch unmöglich.

Der Erfindung liegt daher die Aufgabe zugrunde, ein
Fahrzeug der eingangs genannten Art derart zu
verbessern, daß es in gleicher Weise für den Transport von
Flüssigkeiten wie auch für Schüttgüter eingesetzt werden
kann.

Diese Aufgabe wird erfindungsgemäß dadurch gelöst, daß die
Schwallwand in Transportstellung des Transportbehälters in
einem Winkel zur Vertikalen geneigt angeordnet ist und mit
ihrer Unterkante etwa zur Entnahmeöffnung weist.

In der Entnahmestellung weisen die Schwallwände ebenfalls
zur Entnahmeöffnung, d. h. sie stehen nunmehr nicht mehr
quer zum Schüttgutstrom, sondern nahezu parallel dazu.
Hierdurch kann das Schüttgut ohne Probleme aus dem
Transportbehälter entnommen werden. Dennoch behalten die
Schwallwände ihre eigentliche Funktion bei, nämlich ein
durch die beim Fahren auftretenden Beschleunigungs- bzw.
Bremskräfte bedingtes Schwappen einer in dem Behälter
befindlichen Flüssigkeit zu verhindern. Auf diese Weise
eignet sich das erfindungsgemäße Silofahrzeug in gleicher
Weise für den Transport von Flüssigkeiten wie auch für den
Transport von Schüttgütern. Dadurch wird dem
erfindungsgemäßen Silofahrzeug ein größerer
Anwendungsbereich erschlossen. Der Fahrzeugpark des
Fuhrunternehmers kann auf ein wirtschaftlich günstigeres
Maß verringert werden.

Besonders vorteilhaft ist es, wenn die Schwallwand den
Behälterquerschnitt nur teilweise, eine obere und eine
untere Durchströmöffnung freilassend, bedeckt. Einerseits

0 270 861

ist dies ausreichend, um die Schwallbewegungen der
Flüssigkeit wirksam zu bremsen, andererseits begünstigen
die relativ großen Durchströmöffnungen die schnelle
Entnahme von Schüttgütern aus dem Transportbehälter.

Obwohl die Schwallwände auch als ebene Platten ausgebildet
sein können, ist es jedoch vorteilhaft, daß die
Schwallwand konkav/konvex gekrümmt ausgebildet ist. Die
Schwallwände weisen hierdurch nicht nur eine höhere
Biegesteifigkeit auf, es wird vielmehr auch ein
strömungsgünstiges Profil für die Schwallwand erreicht,
was die schnelle Entnahme der Schüttgüter weiter fördert.

Gemäß einer weiteren Ausgestaltung der Erfindung ist die
Schwallwand als Hohlprofil ausgebildet. Einerseits wird
dadurch die Schwallwand noch steifer, andererseits ist es
dadurch möglich, unterschiedliche Krümmungsradien auf der
Vorderseite und der Hinterseite der Schwallwand zu
verwirklichen.

Besonders vorteilhaft ist es, daß die konkave Seite der
Schwallwand etwa zur Entnahmeöffnung weist. Das hat den
Vorteil, daß das Schüttgut in der Entnahmestellung des
Transportbehälters von der konvexen Seite der Schwallwände
getragen wird und von diesen abrutscht. Es ist nahezu
ausgeschlossen, daß auf der konvexen Seite der
Schwallwände sich Schüttgutreste ansammeln können. Bei den
gängigen Silofahrzeugen befindet sich die Kippachse am
Heck des Fahrzeuges. In diesem Bereich ist auch die
Entnahmeöffnung angeordnet. Das bedeutet, daß die konkave
Seite der Schwallwände ebenfalls zum Fahrzeugheck gewandt
ist. Die Schwallbewegungen der Flüssigkeiten sind
insbesondere bei starken Abbremsungen des Fahrzeuges
unangenehm. Dadurch, daß die Flüssigkeit auf die konkave
Seite der Schwallwand auftrifft, wird die Schwallbewegung

0 270 861

äußerst sanft abgebremst, da die Flüssigkeit zunächst auf einen relativ flach geneigten Bereich der Schwallwand und dann weiter auf einen immer steiler ansteigenden Bereich auftrifft.

Im folgenden wird ein Ausführungsbeispiel der Erfindung anhand einer Zeichnung näher erläutert. Es zeigen:

Figur 1          in einer schematischen Seitenansicht ein
                 erfindungsgemäßes Silofahrzeug und

Figur 2          einen Schnitt durch das Silofahrzeug aus

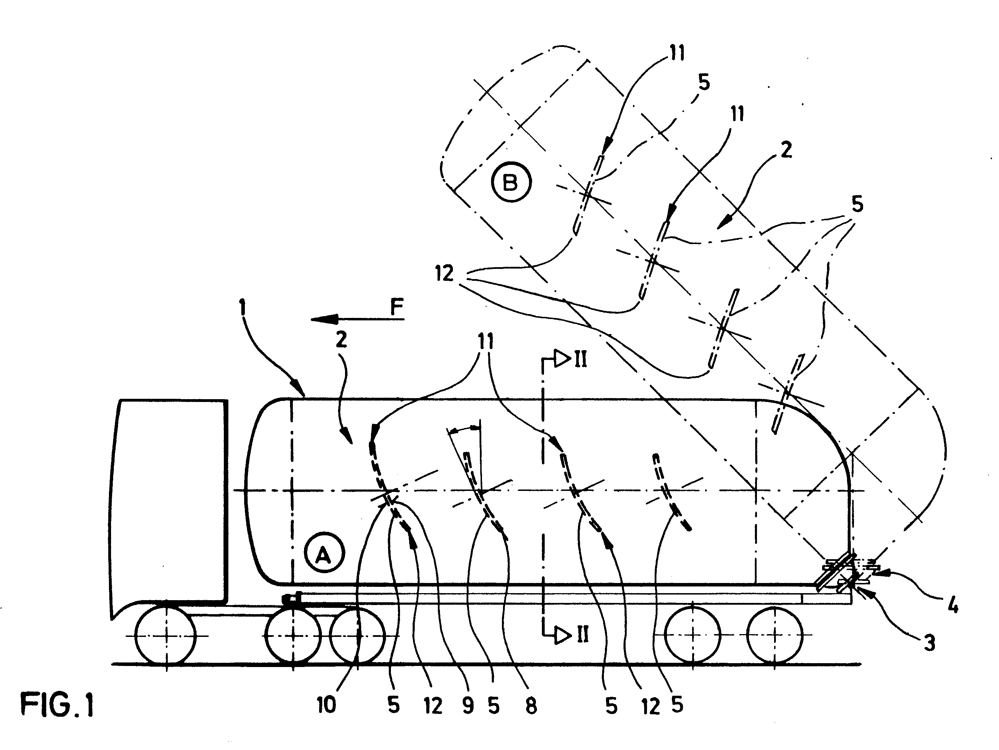

                 Figur 1 entlang der Linie II/II.

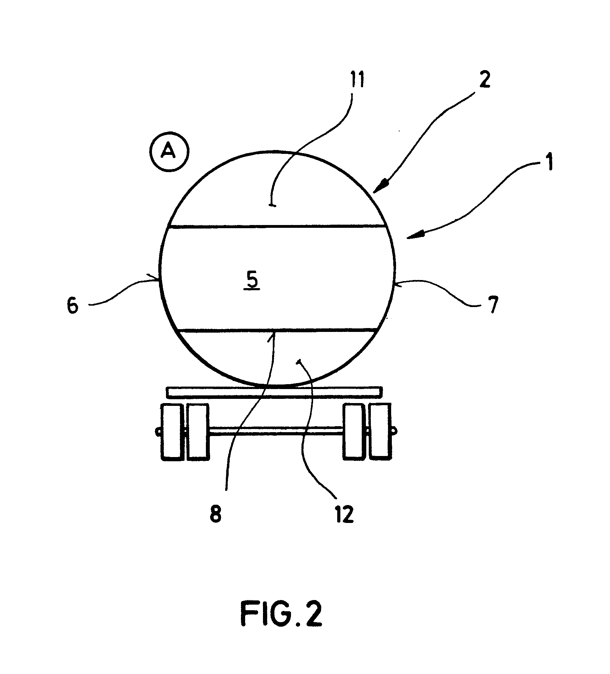

Figur 1 zeigt in einer schematischen Seitenansicht ein Silofahrzeug 1 für den Transport von Flüssigkeiten oder Schüttgütern. Das Silofahrzeug 1 weist einen sich in Fahrtrichtung F erstreckenden Transportbehälter 2 auf. Wie aus Figur 2 ersichtlich ist, weist der Transportbehälter 2 einen im wesentlichen runden Querschnitt auf.

Der Transportbehälter 2 ist um eine sich quer zur Fahrtrichtung erstreckende, horizontale Kippachse 3 aus einer Transportstellung A in eine Entnahmestellung B nach oben schwenkbar.

Die Kippachse 3 befindet sich am Heck des Transportbehälters 2 und verbindet diesen mit dem nicht näher bezeichneten Fahrzeugrahmen. Im Bereich der Kippachse 3 ist eine Entnahmeöffnung 4 vorgesehen, die sich in der Entnahmestellung B an der untersten Stelle des Transportbehälters 2 befindet.

Wie aus Figur 1 deutlich hervorgeht, sind im Inneren des Transportbehälters 2 mehrere, sich mit ihren Hauptebenen

0 270 861

quer zur Fahrtrichtung F erstreckende Schwallwände 5 angebracht.

Figur 2 zeigt deutlich, daß sich die Schwallwände 5 von einer Behälterlängswand 6 zur gegenüberliegenden Behälterlängswand 7 erstrecken. Die Schwallwände 5 können an den Behälterlängswandungen 6 und 7 in üblicher Weise, beispielsweise durch Schweißen befestigt sein.

Die einzelnen Schwallwände 5 sind in Transportstellung A des Transportbehälters 2 in einem Winkel $\alpha$ zur Vertikalen geneigt angeordnet, wobei die Unterkanten 8 der Schwallwände 5 jeweils heckwärts zur Entnahmeöffnung 4 weisen. Hieraus ergibt sich, daß die einzelnen Schwallwände 5 zur Fahrtrichtung ansteigend angeordnet sind.

Der Winkel $\alpha$ liegt bei dem hier beschriebenen Ausführungsbeispiel bevorzugt bei etwa 30 Grad.

Wie deutlich aus Figur 1 hervorgeht, sind die einzelnen Schwallwände 5 konkav/konvex gekrümmt ausgebildet, wobei die konkave Seite 9 heckwärts, also zur Entnahmeöffnung 4 hin weist. Die konvexe Seite 10 weist dagegen in Fahrtrichtung F. Hieraus ergibt sich eine erhöhte Biegesteifigkeit der Schwallwände 5.

Die einzelnen Schwallwände 5 sind darüberhinaus als im wesentlichen plattenförmiges Hohlprofil ausgebildet, wobei jeweils die konkave Seite 9 und die konvexe Seite 10 Seitenwände des Hohlprofils bilden.

Aus Figur 2 geht zudem deutlich hervor, daß die einzelnen Schwallwände 5 nur einen Teil des Querschnittes des Transportbehälters 2 bedecken. Sowohl oberhalb als auch

0 270 861

unterhalb einer jeden Schwallwand 5 verbleiben
Durchströmöffnungen 11 und 12. Die Durchströmöffnungen 11
und 12 entsprechen in ihrer Höhe bei dem hier gezeigten
Ausführungsbeispiel etwa der Höhe einer Schallwand 5.

Die Schwallwände 5 können, wie ansich bekannt, mit
kleineren, hier nicht dargestellten Durchbrüchen versehen
sein.

Im folgenden wird die Wirkungsweise der Erfindung näher
erläutert.

Das erfindungsgemäße Silofahrzeug zeichnet sich dadurch
aus, daß es gleichermaßen für den Transport von
Flüssigkeiten wie auch von Schüttgütern geeignet ist. Im
folgenden wird daher zunächst das Verhalten des
Silofahrzeuges beim Transport von Flüssigkeiten
beschrieben.

Die Schwallbewegungen der Flüssigkeiten in dem
Transportbehälter 2 treten in besonders starkem Maße auf,
wenn der Behälter nur etwa zur Hälfte gefüllt ist. Bei
plötzlichen Bremsmanövern oder auch beim Beschleunigen des
Fahrzeuges wird die in dem Behälter befindliche
Flüssigkeit ebenfalls in bzw. entgegen der Fahrtrichtung F
bewegt, um dann - falls keine Schwallwände vorhanden wären
- gegen die Behälterböden zu prallen, was zu stoßartigen
Belastungen des Silofahrzeuges führen und damit die
Fahrsicherheit des Fahrzeuges erheblich beeinträchtigen
würde. Da nun aber Schwallwände eingesetzt sind, kann die
in dem Behälter vorhandene Flüssigkeit nicht als Ganzes
über einen längeren Weg beschleunigt werden, sondern
prallt bereits nach kurzen Abständen gegen die einzelnen
Schwallwände 5.

Insbesondere das Bremsen führt zu starken Beschleunigungen der in dem Behälter befindlichen Flüssigkeit. Aufgrund der schrägen, und zudem noch gekrümmten Ausbildung der einzelnen Schwallwände 5 prallt die Flüssigkeit nicht hart auf die Schwallwände, sondern wird unter dem Winkel $\alpha$ sanft nach oben gelenkt, wobei bereits ein Teil der in der Flüssigkeit vorhandenen kinetischen Energie umgesetzt wird. Selbst wenn die Flüssigkeit durch die oberen Durchströmöffnungen 11 kaskadenartig weiterströmt, so geschieht dies in einzelnen, relativ energiearmen Strömen, ohne daß es zu einer plötzlichen Stoßbelastung des Fahrzeuges kommen kann.

Zum Entleeren des Transportbehälters 1 wird dieser um die Kippachse 3 nach oben in die Entnahmestellung B geschwenkt, so daß die Flüssigkeit ohne Behinderung durch die Schwallwände 5 durch die obere und untere Druchströmöffnung 11 bzw. 12 zur Entnahmeöffnung 4 strömen und von dort in herkömmlicher Weise entnommen werden kann.

Wird mit dem Silofahrzeug 1 beispielsweise granulatförmiges Schüttgut transportiert, so spielen die Schwallbewegungen eher eine untergeordnete Rolle. Das Schüttgut bleibt im wesentlichen bei allen Fahrmanövern in konstanter Höhe in dem Transportbehälter, ohne sich relativ zu diesem zu bewegen.

Zur Entleerung des Behälters 2 wird dieser wiederum um die Kippachse 3 nach oben in die Entnahmestellung B geschwenkt. Die Schwallwände 5, die in der Transportstellung A noch mit einem Winkel $\alpha$ zur Vertikalen geneigt waren, durchlaufen während dieser Schwenkbewegung eine Stellung, in der sie vertikal ausgerichtet sind und liegen in der Entnahmestellung B nur unter einem sehr geringen Winkel zur Vertikalen geneigt.

0 270 861

Das heißt die Schwallwände 5 stehen in der
Entnahmestellung B fast senkrecht.

Das in dem Behälter befindliche Schüttgut rutscht daher
ohne Probleme von den Schwallwänden 5 auf den
Behälterboden ab und strömt durch die jeweils unteren
Durchströmöffnungen 12 der einzelnen Schwallwände 5 nach
unten bis zur Entnahmeöffnung 4. Von dort kann das
Schüttgut ebenfalls in herkömmlicher Weise entnommen
werden.

Mit dem erfindungsgemäßen Silofahrzeug ist es somit
möglich, einerseits Flüssigkeiten zu transportieren, ohne
daß allzu starke Schwallbewegungen auftreten, und
andererseits beispielsweise granulatförmige Schüttgüter zu
transportieren, ohne daß die Schwallwände bei der
Entleerung des Behälters stören.

Es ist auch möglich, daß die einzelnen Schwallwände in
sich profiliert ausgebildet sind, um so deren
Biegesteifigkeit noch zu erhöhen.

EY, STOCKMAIR & PARTNER

PATENTANWÄLTE
EUROPEAN PATENT ATTORNEYS

A. GRÜNECKER, DIPL -ING
DR. H. KINKELDEY, DIPL -ING
DR. W. STOCKMAIR, DIPL -ING AE E (CALTECH)
DR. K. SCHUMANN, DIPL -PHYS
P. H. JAKOB, DIPL -ING
DR. G. BEZOLD, DIPL -CHEM
W. MEISTER, DIPL -ING
H. HILGERS, DIPL -ING
DR. H MEYER-PLATH, DIPL -ING
DR. M. BOTT-BODENHAUSEN: DIPL PHYS
DR. U. KINKELDEY, DIPL -BIOL

*LICENCIÉ EN DROIT DE L UNIV DE GENÈVE

8000 MÜNCHEN 22
MAXIMILIANSTRASSE 58

IHR ZEICHEN/YOUR REF                    UNSER ZEICHEN/OUR REF                    DATUM/DATE
                                                                                10.11.1987
                                                                                EP 3905-80/Ch

**Patentansprüche**

1.      Silofahrzeug für den Transport von Flüssigkeiten und Schüttgütern mit einem sich in Fahrtrichtung erstreckenden, um eine etwa horizontale Querachse in eine Entnahmestellung kippbaren Transportbehälter mit in Entnahmestellung untenliegender Entnahmeöffnung, wobei im Inneren des Transportbehälters mindestens eine sich mit ihrer Hauptebene quer zur Fahrtrichtung erstreckende Schwallwand angebracht ist,
dadurch  g e k e n n z e i c h n e t,
daß die Schwallwand (5) in Transportstellung (A) des Transportbehälters (2) in einem Winkel ($\alpha$) zur Vertikalen geneigt angeordnet ist und mit ihrer Unterkante (8) etwa zur Entnahmeöffnung (4) weist.

TELEFON (0 89) 22 28 62      TELEX 5 29 380 MONA D      TELEGRAMME: MONAPAT®      TELEFAX GR. 3 CCITT (0 89) 22 02 87

Bankkonten:      H. Aufhäuser, München 173 533      Deutsche Bank, München 17/51734      Postgirokonto München 462 12-801
Bankers:         BLZ 700 306 00                      BLZ 700 700 10                        BLZ 700 100 80
                 SWIFT-Adr. AUFHDEMM                 SWIFT-Adr. DEUT DE MM

0 270 861

2.      Silofahrzeug nach Anspruch 1,
dadurch   g e k e n n z e i c h n e t,
daß die Schwallwand (5) den Behälterquerschnitt nur teilweise,
eine obere und eine untere Durchströmöffnung (11, 12)
freilassend bedeckt.

3.      Silofahrzeug nach Anspruch 1 oder 2,
dadurch   g e k e n n z e i c h n e t,
daß die Schwallwand (5) konkav/konvex gekrümmt ausgebildet
ist.

4.      Silofahrzeug nach mindestens einem der Ansprüche 1
bis 3,
dadurch   g e k e n n z e i c h n e t,
daß die Schwallwand (5) als Hohlprofil ausgebildet ist.

5.      Silofahrzeug nach mindestens einem der Ansprüche 1
bis 4,
dadurch.   g e k e n n z e i c h n e t,
daß die konkave Seite (9) der Schwallwand (5) etwa zur
Entnahmeöffnung (4) weist.

FIG.1

0 270 861

EP 3905

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | SOVIET INVENTIONS ILLUSTRATED, Sektion Mechanik, Woche K48, 18. Januar 1984, Zusammenfassungsnr. 831588 Q15 Q34, Derwent Publications Ltd., London, GB; & SU - A - 992 336 (MUTIN F I) 05.02.1983 | 1 | B 60 P 3/22 |
| A | idem --- | 3,5 | |
| Y | DE-A-2 413 860 (SCHAUBSTAHL-WERKE) * Seite 4, Zeile 20 - Seite 5, Zeile 10; Seite 6, Zeile 30 - Seite 7, Zeile 1; Figuren 1-3 * | 1 | |
| A | --- | 2 | |
| A | US-A-2 980 131 (WILLIAMS) * Spalte 2, Zeilen 56-63; Figur 1 * ----- | 1 | |

| | | | RECHERCHIERTE SACHGEBIETE (Int. Cl.4) |
|---|---|---|---|
| | | | B 60 P 3/00 |

Der vorliegende Recherchenbericht wurde für alle Patentansprüche erstellt

| Recherchenort | Abschlußdatum der Recherche | Prüfer |
|---|---|---|
| BERLIN | 05-02-1988 | LUDWIG H J |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument